(19) Europäisches Patentamt
European Patent Office
Office européen des brevets

(11) **EP 1 633 121 B1**

(12) **EUROPEAN PATENT SPECIFICATION**

(45) Date of publication and mention
of the grant of the patent:
**05.11.2008 Bulletin 2008/45**

(51) Int Cl.:
*H04M 9/08* (2006.01)          *H04R 3/00* (2006.01)
*G10L 21/02* (2006.01)

(21) Application number: **04021055.1**

(22) Date of filing: **03.09.2004**

(54) **Speech signal processing with combined adaptive noise reduction and adaptive echo compensation**

Sprachsignalverarbeitung für die gemeinsame adaptive Reduktion von Störgeräuschen und von akustischen Echos

Traitement du signal de parole pour la réduction adaptative de bruit et le contrôle adaptatif de l'écho acoustique simultanés

(84) Designated Contracting States:
**AT BE BG CH CY CZ DE DK EE ES FI FR GB GR HU IE IT LI LU MC NL PL PT RO SE SI SK TR**

(43) Date of publication of application:
**08.03.2006 Bulletin 2006/10**

(73) Proprietor: **Harman Becker Automotive Systems GmbH**
**76307 Karlsbad (DE)**

(72) Inventors:
• **Kellermann, Walter, Prof.Dr.-Ing**
**91058 Erlangen (DE)**
• **Herbordt, Wolfgang,c/oKellermann, W., Prof.Dr.-Ing**
**91058 Erlangen (DE)**

(74) Representative: **Grünecker, Kinkeldey, Stockmair & Schwanhäusser Anwaltssozietät**
**Leopoldstraße 4**
**80802 München (DE)**

(56) References cited:
WO-A-01/93554          GB-A- 2 355 632

• KELLERMANN W: "Strategies for combining acoustic echo cancellation and adaptive beamforming microphone arrays" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, vol. 1, 21 April 1997 (1997-04-21), pages 219-222, XP010226174 ISBN: 0-8186-7919-0
• HOSHUYAMA O ET AL: "A ROBUST ADAPTIVE BEAMFORMER FOR MICROPHONE ARRAYS WITH A BLOCKING MATRIX USING CONSTRAINED ADAPTIVE FILTERS" IEEE TRANSACTIONS ON SIGNAL PROCESSING, IEEE, INC. NEW YORK, US, vol. 47, no. 10, October 1999 (1999-10), pages 2677-2684, XP000947154 ISSN: 1053-587X
• HERBORDT W ET AL: "Computationally Efficient Frequency-Domain Combination of Acoustic Echo Cancellation and Robust Adaptive Beamforming" EUROSPEECH, vol. 2, 2001, page 1001, XP007004503

EP 1 633 121 B1

## EP 1 633 121 B1

**Description**

**Description of the Invention**

The present invention relates to a system and a method for multi-channel speech signal processing with combined noise reduction and acoustic echo compensation.

Speech signal processing has often to be performed in a noisy background environment. A prominent example is hands-free voice communication in vehicles. Hands-free telephones provide a comfortable and safe communication systems of particular use in motor vehicles. In the case of hands-free telephones it is mandatory to suppress noise in order to guarantee the communication. The amplitudes and frequencies of the noise signals are temporally variable due to, for example, the speed of the vehicle and road noises.

Of particular importance is the suppression of signals of the remote subscriber which are emitted by the loudspeakers and therefore received again by the microphone(s), since otherwise unpleasant echoes can severely affect the quality and intelligibility of voice conversation. In the worst case acoustic feedback can even leads to a complete breakdown of communication.

One main problem lies in the reverberating characteristics of the room. In the case of hand-free telephones in motor vehicles the detection of the interior acoustics becomes very difficult, since abrupt changes in the acoustics, for example, owing to movements of the vehicle occupants have to be distinguished.

To overcome the above mentioned problems means for acoustic echo compensation (AEC) are provided, that basically work at follows. By means of a linear (EP 0204718 B1) or non-linear (EP 1020068 B1; WO-A-96/26592) adaptive filter a replica of the acoustic feedback is synthesized and a compensation signal is obtained from the received signal of the loudspeakers. This compensation signal is subtracted from the sending signal of the microphone thereby generating a resulting signal to be sent to the remote subscriber.

Besides the acoustic echoes, hands-free communication suffers from a relatively low signal-to-noise ratio (SNR). Consequently, some noise reduction must be employed in order to improve the speech signal quality.

Current multi-channel systems primarily make use of adaptive or non-adaptive beamformers, see, e.g., "Optimum Array Processing, Part IV of Detection, Estimation, and Modulation Theory" by H.L. van Trees, Wiley & Sons, New York 2002. The beamformer combines multiple microphone input signals to one beamformed signal with an enhanced SNR.

The combination of AEC means and adaptive beamformers is known for the art (see, e.g., "Microphone Arrays: Signal Processing Techniques and Applications", by Kellermann, W., Springer, Berlin, 2001). However, depending on the actual implementations different convergence properties of the adaptive beamformers and the echo canceling means can inhibit synergetic effect and/or the necessity of employing one echo compensating means for each microphone channel results in uneconomical realizations.

The international patent application WO 01/93554 A2 discloses a method of processing an audio signal comprising beamforming and echo cancellation. The disclosed adaptive echo cancellation means makes use of the actual filter responses of the adaptive beamformer.

The document "A Robust Adaptive Beamformer for Microphone Arrays with a Blocking Matrix Using Constrained Adaptive Filters", IEEE, Trans. Sign. Proc., vol. 47. No. 10, October 1999, by O. Hoshuyama, Sugiyama and A. Hirano, discloses a generalized sidelobe canceller with a blocking matrix using coefficient-constrained adaptive filters and a multi-input canceller with norm-constrained adaptive filters.

Despite the recent developments and improvements, effective echo compensation and noise reduction in speech signal processing proves still to be a major challenge. It is therefore the problem underlying the present invention to overcome the above-mentioned drawbacks and to provide a system and a method for speech signal processing, in particular, suitable for hands-free telecommunication system showing improved acoustic properties as an enhanced signal-to-noise ratio (SNR) and efficient acoustic echo compensation.

The problem is solved by a system for speech signal processing with noise reduction and echo compensation according to Claim 1 and a method according to Claim 12. The system according to the present invention comprises an adaptive beamforming signal processing means configured to receive first speech signals and to derive adaptively beamformed signals from the first speech signals, an adaptive echo compensating means configured to reduce acoustic echoes in the adaptively beamformed signals and an adaptation means configured to simultaneously perform a combined adaptation of the adaptive beamforming means and the adaptive echo compensating means.

The inventive system may further comprise a microphone array comprising at least two microphones to detect microphone signals as well as at least one loudspeaker to output loudspeaker signals comprising second speech signals, and wherein the first speech signals mentioned above may be obtained on the basis of the microphone signals, and the adaptive echo compensating means may reduce acoustic echoes in the adaptively beamformed signals on the basis of the loudspeaker signals.

Such a system for speech signal processing provides a significantly enhanced SNR and, ideally, a complete echo canceling. By speech signals any signals representing information of verbal utterances are meant. The speech signals processed by the inventive system, e.g., might be available as functions of discrete time indices or as Fourier transformed signal in the frequency domain. The microphones not only detect speech signals but also noise and acoustic echoes. Consequently, the adaptive beamforming means not only receives speech signals but also noise and echo signals.

The beamforming and the echo compensating means are adaptive ones which means that they employ filters comprising temporal varying filter vectors that are continuously re-calculated during the speech communication in order to optimize the speech signal processing with respect to noise reduction and echo compensation. The echo compensating means can be a single- or multiple-channel one.

The simultaneous and combined adaptation of the adaptive beamforming means and the adaptive echo canceling means gives rise to desirable synergetic effects.

Technically speaking the combined adaptation is realized by the adaptation of an effective weight vector representing the combined weights of the adaptive filters of both the beamforming means and the AEC means.

Different from a typically state-of-the-art system that is characterized by first employing an adaptive beamforming means and subsequently employing an AEC means, wherein the AEC means suffers from a low convergence speed and thus, usually cannot contribute significantly to the echo canceling, both noise reduction and echo canceling are performed very efficiently by the inventive system. Contrary to the art, the inventive combined adaptation of the adaptive beamforming and the adaptive AEC means allows to simultaneously update both means, i.e. no tracking problems occur at all.

One should also note that only one echo compensating means is necessary according to the present invention. This is different from constructions know from the art wherein first AEC means and subsequently an adaptive beamforming means are employed requiring one AEC means for each microphone channel.

Moreover, the number of degrees of freedom for both the noise reduction and the echo canceling are increased by the number of loudspeakers thereby improving the optimization of the adaptive filters employed by the beamforming and AEC means, respectively.

According to one embodiment of the present invention the adaptive beamforming signal processing means is an adaptive beamformer.

This realization of the inventive system seems to be the simplest and cheapest one. A beamformer combines different input signals received concurrently to one single beamformed signal. The noise levels of the signal portions in each channel usually differ from each other. By simply averaging the different channels with very low SNR may deteriorate the SNR of the output signal. Thus, it is desirable to introduce weighting coefficients (weights) for the different channels, that are preferably calculated time-dependently in response to changing speech detecting condition, e.g., time-dependent noises and/or speaker movement. According to one advantageous embodiment the beamformed signal is obtained by summing up the weighted concurrently received input signals.

Depending on the actual application an improved performance may, however, be desired.

Thus, according to another inventive embodiment the adaptive beamforming signal processing means comprises a blocking matrix configured to receive the first speech signals and to obtain noise reference signals, an adaptive noise canceling means configured to receive the noise reference signals and to obtain adaptive noise signals, a beamformer configured to receive the first speech signals and to obtain first beamformed signals, and a means configured to subtract the adaptive noise signals obtained by the adaptive noise canceling means from the first beamformed signals to obtain the adaptively beamformed signals.

A generic structure comprising the beamformer, the blocking matrix, which can be chosen as being a non-adaptive or an adaptive one, and the adaptive noise canceling means is a General Sidelobe Canceller (GSC). GSC designs comprise two signal processing path: one noise reduction and one reference signal processing path. The reference signal processing path comprises of a beamformer which is directed to one or more sources of desired signals detected by the microphone array. The microphone signals detected concurrently by the microphone array and comprising noise and echoes besides the desired speech signal are combined to one beamformed signal with an enhanced SNR.

The noise reduction signal processing path usually comprises a blocking matrix receiving the speech signals and employed to generate noise reference signals. In the simplest realization the blocking matrix performs a subtraction of adjacent channels of the received signals.

The noise reference signals may serve as input signals for an adaptive noise canceling means. The adaptive noise cancellation is done by (complex-valued) filters. These filters are usually adapted with the goal that the power of the output signal is minimized. In a conventional GSC the output signal of the adaptive noise canceling means is subtracted form the beamformed signal to achieve an output signal. According to the present invention, the adaptive noise cancellation is combined with an adaptive echo canceling. The filters of the combined adaptive noise canceling means and the adaptive echo canceling means are adapted simultaneously.

The incorporation of a GSC structure significantly reduces the processor load. Different form previous combinations of a GSC and an AEC means, the inventive simultaneous and combined adaptation of GSC and AEC components inhibits leakage of acoustic echoes through the blocking matrix and the adaptive noise canceling means, even when acoustic echoes are efficiently suppressed.

Also, different from the art the inventive system works reliably even when strong local noise signals are detected by the microphone array and/or the echo paths are changing continuously.

The adaptive noise canceling means and the adaptive echo compensating means comprise adaptive filters and preferably the filter length of the adaptive filter of the adaptive echo compensating means is equal to or longer than the filter length of the adaptive filter of the adaptive noise canceling means.

By "filter length" commonly the number of filter coefficients is meant. Usually, the AEC means needs a higher number of filter coefficients to work sufficiently reliable which results in a lower convergence speed as compared to the adaptive beamforming means. In noisy environments with relatively low reverberations, however, e.g. in vehicle, the choice of a comparable or equal number of filter coefficients for the AEC means and the beamforming means may be tolerable.

It may be desirable to have the adaptation means to simultaneously perform the combined adaptation of the adaptive beamforming means and the adaptive echo compensating means by applying a Least Square optimization criterion.

The Least Square optimization represents a well-tested and robust method in speech signal processing for adapting complex filters and it is relatively simple to employ. It is performed by minimizing a windowed sum of squared output signal samples subject to constraints that assure at least uniqueness of the output signal. The windowing function employed in the summation selects samples of output signals to be considered for the optimization procedure.

The constraints of the Least Square optimization criterion may be formulated as

$$(\underline{C}^T(k), 0_{C \times QN_a})^T (w^T(k), a^T(k))^T = c(k)$$

where the upper index $T$ denotes the vector transposition operation, $\underline{C}$ is the conventional constraint matrix known from linearly-constrained minimum variance beamforming, $w(k)$ and $a(k)$ are the filters of the adaptive beamforming and the adaptive noise canceling, respectively, $Q$ is the number of the at least one loudspeaker, $N_a$ is the number of filter coefficients of the filters of the adaptive echo canceling means and $c$ is the constraint vector representing $C$ constraints.

These constraints represent the combined adaptation of the filters of the adaptive beamforming means and the adaptive echo compensating means by means of the matrix $(w^T(k), a^T(k))^T$. The dimension of the null matrix C x $QN_a$ results from the reasonable assumption that the loudspeaker signals are uncorrelated.

The system according to the present invention may further comprise a means configured to perform a time delay compensation of the microphone signals to obtain the first speech signals which subsequently are used as input signals for the adaptive beamforming means be it the adaptive beamformer or a GSC like structure.

It may be advantageous to synchronize the microphone signals corresponding to a desired target signal in order to further improve performance of the inventive system. For this purpose, the time delay of each signal has to be computed and compensated.

It may be preferred to further employ an adaptive self-calibration means configured to match the phases and amplitudes of the microphone signals or the time delay compensated microphone signals to obtain the first speech signals.

The adaptive filters of the adaptive self-calibration means can be calculated by means of the Normalized Least-Mean Square algorithm. After time delay compensation the microphone signals may not be matched accurately due to, e.g., speaker movement and phase and amplitude mismatch of the different microphones. By the adaptive self-calibration, the mismatches with respect to phases and amplitudes are minimized. Accordingly, the desired signals in each of the channels are time (phase)-aligned, the amplitudes of the desired signal portions are almost equal in each of the channels and the signals are expected to exhibit very similar frequency characteristics.

The adaptive beamforming signal processing means and the adaptive echo compensating means and/or the means configured to perform a time delay compensation of the microphone signals and/or the adaptive self-calibration means are configured to perform processing in the time domain or in the frequency domain or in the sub-band frequency domain.

A realization of the inventive system working a the frequency domain may be considered as being advantageous, since adaptation the frequency domain may show better convergence properties and better tracking capabilities. Suitable means for performing Fast Fourier Transforms and Inverse Fast Fourier Transforms where it is appropriate are known from the art.

The present invention also provides a system for speech signal processing as described above, wherein the microphone array comprises at least one directional microphone.

Moreover, the present invention provides a hands-free system comprising the inventive system for speech signal processing with combined noise reduction and echo compensation as described above.

Furthermore, the present invention is directed to the use of the previously described systems for speech signal processing and hands-free systems in a vehicle. An improved SNR and echo canceling is particularly desirable in the acoustically challenging contents of communication devices in vehicular cabins. If the microphone array is arranged in a frame, it can easily be mounted in a vehicular cabin.

Also, it is provided by the present invention a vehicle comprising one of the above-described systems for speech signal processing and hands-free systems.

Furthermore, the present invention provides a method for speech signal processing with combined noise reduction and echo compensation, comprising receiving first speech signals as input signals for an adaptive beamforming employing adaptive beamforming filters, receiving input signals for an adaptive compensating of acoustic echoes employing adaptive echo compensation filters, determining combined adaptive filters from the adaptive beamforming filters and the adaptive echo compensation filters, simultaneously adapting the adaptive beamforming filters and the adaptive echo compensation filters by adapting the combined adaptive filters and obtaining adaptively beamformed signals by the adaptive beamforming and echo compensating the adaptively beamformed signals to obtain an output signal of the speech signal processing.

The adaptive beamforming as well as the adaptive echo compensating are performed utilizing respective adaptive filters. The associated weight vectors can be combined to one combined filter vector. The adaptation of this combined filter vector results in a simultaneous adaptation of the filters of the combined adaptive beamforming means and the adaptive echo compensating means.

The inventive method preferably comprises detecting microphone signals by a microphone array comprising at least two microphones and obtaining loudspeaker signals comprising second speech signals that are output by at least one loudspeaker. In this case the first speech signals mentioned above can be obtained on the basis of the microphone signals, and the loudspeaker signals can be used as the input signals for the adaptive compensating of acoustic echoes.

The adaptive beamforming may be performed by an adaptive beamformer or by the steps of receiving and processing of the first speech signals by a blocking matrix to obtain noise reference signals, processing of the noise reference signals by an adaptive noise canceling means to obtain adaptive noise signals, receiving and processing of the first speech signals by a beamformer to obtain first beamformed signals and subtracting the adaptive noise signals obtained by the adaptive noise canceling means from the first beamformed signals to obtain adaptively beamformed signals.

Adaptive filters are used for the adaptive echo compensation and the adaptive noise canceling and the filter length of the filter of the adaptive echo compensating means is preferably equal to or longer than the filter length of the filter of the adaptive noise canceling means.

The combined adaptive filters are preferably adapted by applying a Least Square optimization criterion with a constraint according to

$$(\underline{\underline{C}}^{T}(k), 0_{C \times QN_a})^{T} (w^{T}(k), a^{T}(k))^{T} = c(k)$$

where the upper index $T$ denotes the vector transposition, $\underline{C}$ is the conventional constraint matrix known from LCMV beamforming, $w(k)$ and $a(k)$ are the filters of the adaptive beamforming and the adaptive noise canceling, respectively, $Q$ is the number of the at least one loudspeaker, $N_a$ is the number of filter coefficients of the filters of the adaptive echo canceling means and $\underline{c}$ is the constraint vector representing $C$ constraints.

The microphone signals may advantageously be compensated for time delay to obtain the first speech signals and the microphone signals or the time delay compensated microphone signals may be adaptively self-calibrated.

The adaptive beamforming and the adaptive echo compensating and/or the time delay compensating and/or the adaptive self-calibrating can be performed in the time domain or in the frequency domain or in the sub-band frequency domain.

Furthermore, the present invention provides a computer program product, comprising one or more computer readable media having computer-executable instructions for performing the steps of the inventive method for speech signal processing with noise reduction as described above.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 shows one embodiment of the speech signal processing means according to the present invention comprising an adaptive beamformer and an AEC means being simultaneously optimized.

Figure 2 shows another embodiment of the speech signal processing means according to the present invention comprising a GSC and an AEC means being simultaneously optimized.

Figure 3 shows selected steps of the inventive method for speech signal processing with combined noise reduction and acoustic echo compensation.

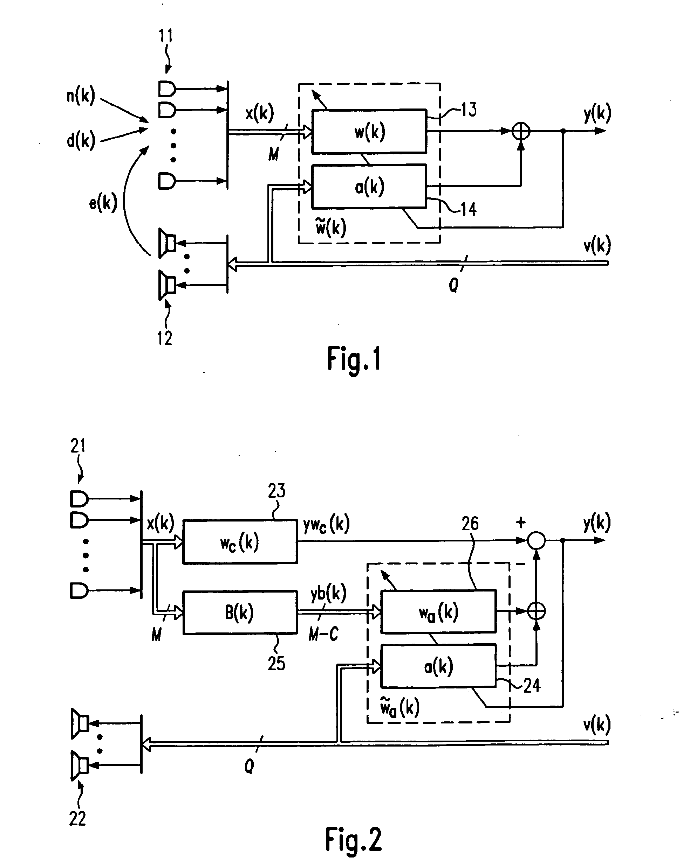

The general structure of one embodiment of the speech signal processing according to the present invention is illustrated in Figure 1. For illustration purposes, the processing is done in the discrete time domain. Alternatively, the algorithms could be applied in the full Discrete Fourier Transform domain or the sub-band domain.

The microphone signals detected by $M$ microphones 11 can be available as $x(k)$ ($k$ is the discrete time index) and are assumed to be superimposed signals

$$x(k) = d(k) + n(k) + e(k),$$

where $d(k)$, $n(k)$ and $e(k)$ denote the desired, the local noise and the acoustic echo signals, respectively. The echoes are caused by the output signals of at least one loudspeaker 12 and show the reverberating characteristics of the room.

The signals $x(k)$ are processed by a combined adaptive beamformer. The beamformer is designed to combine the input signals of the different $M$ microphone channels to one single beamformed output signal with an enhanced signal-to-noise ratio (SNR). For this purpose the beamformer makes use of adaptive filters $w(k)$. The AEC means models the echo paths, e.g., as linear responses. By means of adaptive filters $a(k)$ the echo portions of the processed microphone signals can be subtracted.

The output signal of the combined system can be written as a function of the sensor signals $x(k)$, the loudspeaker signals $v(k)$ as well as the adaptive filters $w(k)$ and $a(k)$:

$$y(k) = \widetilde{w}^{T}(k)\widetilde{x}(k).$$

with

$$\widetilde{w}(k) = (w^{T}(k), a^{T}(k))^{T},$$

$$\widetilde{x}(k) = (x^{T}(k), v^{T}(k))^{T}$$

where the upper index $T$ denotes the vector transposition operation. The loudspeaker signals $v(k)$ of $Q$ loudspeaker channels are, in general, the reference signals for the acoustic echoes, i.e. they serve as input signals for the adaptive echo compensating means 14. The signals $v(k)$ can be regarded as further sensor channels or paths of the beamformer thereby increasing the degrees of freedom usable for the adaptive beamforming.

The adaptive beamformer, i.e. the adaptive filters $w(k)$ with $N_w$ filter coefficients, and the AEC means, i.e. the adaptive filters $a(k)$ with $N_a$ filter coefficients, are now optimized in combination and simultaneously by an adaptation means (in Figure 1 it is indicated by the dashed box), in a way that the beamformer gain is maintained and the acoustic echoes are suppressed. For the optimization procedure the Least Square (LS) optimization criterion can be applied. In principle, the mathematical technique is similar to the one applied, e.g., to conventional Linear Constrained Minimum Variance (LCMV) beamformers (see, e.g., "Optimum Array Processing, Part IV of Detection, Estimation, and Modulation Theory" by H.L. van Trees, Wiley & Sons, New York 2002). One has to solve for

$$\min_{\widetilde{w}(k)} \sum_{i=0}^{k} w_i(k) y^2(i) \quad subject \ to \quad \underline{\widetilde{C}}^{T}(k)\widetilde{w}(k) = c(k).$$

with

$$\underline{\widetilde{C}}(k) = (\underline{C}^{T}(k), 0_{C \times QN_a})^{T},$$

where $\underline{C}$ (k) is the conventional constraint matrix (of size $M$ $N_w$ x $C$) known from LCMV beamformers and $c(k)$ is the constraint column vector of length $C$ that represents C constraints to assure unity of the beamformed output signal. The C x $QN_a$ nulls in the constraint matrix result from the reasonable assumption that the loudspeaker signal $v(k)$ are uncorrelated. The windowing function $w_i$ extracts the desired samples from the output signals which should be included into the optimization procedure.

It should be noted that according to the optimization criterion above, for an arbitrary number of microphones, only one error signal has to be minimized. The mathematical solution of the optimization problem is state of the art of signal processing.

Figure 2 illustrates an embodiment of the speech signal processing means according to the present invention comprising a General Sidelobe Canceller (GSC) and an AEC means being simultaneously optimized. The beamformer of Figure 1 is replaced by a GSC structure. The GSC can be regarded as one advantageous realization of an adaptive beamformer and comprises two signal processing paths.

The reference (or upper) signal processing path comprises of a fixed beamformer 23 directed to one or more sources of a desired signal detected by the microphones 21. The beamformed signal $y_{Wc}(k)$ is characterized by an enhanced SNR.

The noise reduction (or lower) signal processing path comprises of a non-adaptive or an adaptive blocking matrix 25 that generates noise reference signals $y_B(k)$. As little desired speech as possible should be present in these signals. In the simplest realization the blocking matrix performs a subtraction of adjacent channels.

The noise reference signals $y_B(k)$ are used as input signals for an adaptive noise canceling means 26. The adaptive noise cancellation is done by (complex-valued) filters $w_a(k)$. These filters are usually adapted with the goal that the power of the output signal is minimized. The output signal of the adaptive noise canceling means is then subtracted from the beamformed signal. Since the reference signals ideally contain no signal portions, the residual noise of the signal $y_{wc}(k)$ is almost completely reduced by the adaptive noise canceling means and thereby the SNR of the final output signal $y(k)$ is increased.

In conventional settings for adaptation of the filters for noise reduction, the Normalized Least-Mean Square (NLMS) algorithm may be used which reads:

$$y_{GSC}(k) = y_{Wc}(k) - \sum_{m=1}^{M-1} y_B(k) w_a(k)$$

$$w_a(k+1) = w_a(k) + \frac{\beta(k)}{\sum_{l=1}^{M-1} \left| y_B(k) \right|^2} y_{GSC}(k) y_B^{\bullet}(k).$$

where $Y_{GSC}$ denotes the output signal of the GSC alone, i.e., if no AEC means was present, $\beta$ is some positive real-valued number and the asterisk denotes the complex conjugate of the noise reference signals. Accordingly, the noise reference signals and the adaptive filters $w_a(k)$ are used to generate an adaptive noise signal to be subtracted from the beamformed signal $y_{Wc}$ output by the beamformer 23.

However, according to present invention the adaptive filters of both the GSC and the AEC means have to be adapted simultaneously by optimizing for $\tilde{w}(k)$. The algebra is consequently more involved.

The weight vector $\tilde{w}(k)$, introduced in the description of Figure 1, can be projected onto two orthogonal sub-spaces, one of which ($\tilde{w}_c(k)$) can be chosen to fulfill the C constraints (constraint subspace):

$$P_c(k)\tilde{w}(k) =: \tilde{w}_c(k) = (w_c^T(k), 0_{1 \times QN_a})^T$$

The second subspace can be chosen as

$$P_a(k)\tilde{w}(k) := -\tilde{B}(k)\tilde{w}_a(k),$$

with

$$\underset{=}{\widetilde{C}}^{T}(k)\widetilde{B}(k) \underset{=}{!} 0.$$

and

$$\widetilde{B}(k) = \begin{pmatrix} B(k) & 0_{MN_w \times QN_a} \\ 0_{QN_a \times (M-C)N_{w_a}} & I_{QN_a \times QN_a} \end{pmatrix}$$

where $I_{QN_a \times QN_a}$ is the identity matrix of size $QN_a$ x $QN_a$ and the columns of the matrix $B(k)$ are orthogonal to the columns of the constraint matrix $\underline{C}(k)$. The least square minimization of the final output signal $y(k)$ now reads

$$\min_{\widetilde{w}_a(k)} \sum_{i=0}^{k} w_i(k)\left[\left(\widetilde{w}_c(k) - \widetilde{B}(k)\widetilde{w}_a(k)\right)^T \widetilde{x}(i)\right]^2$$

with $\widetilde{w}_c(k)$ being the projection of the weight vector $\widetilde{w}(k)$ onto the second of the orthogonal subspaces fulfilling the constraint of the optimization problem.

By the solution of the minimization problem one obtains the optimal weight vector $\widetilde{w}_{a,opt}(k)$

$$\widetilde{w}_{a,opt}(k) = \left(\widetilde{B}^T(k)\widetilde{\Phi}(k)\widetilde{B}(k)\right)^+ \widetilde{B}^T(k)\widetilde{\Phi}(k)\widetilde{w}_c(k),$$

with

$$\widetilde{\Phi}(k) = \sum_{i=0}^{k} w_i(k)\widetilde{x}(i)\widetilde{x}^T(i).$$

By $\widetilde{\Phi}(k)$ the sample correlation matrix of the data vector $\widetilde{x}(k)$ is denoted and the upper index + means the pseudoinverse of the matrix. Formally the solution for the optimum weight vector is equivalent to the optimum weight vector for the GSC (see, e.g., "Broad band beamforming and the generalized sidelobe canceller", IEEE Trans. on Acoustic Speech and Signal Processing, vol. 34, p.1322).

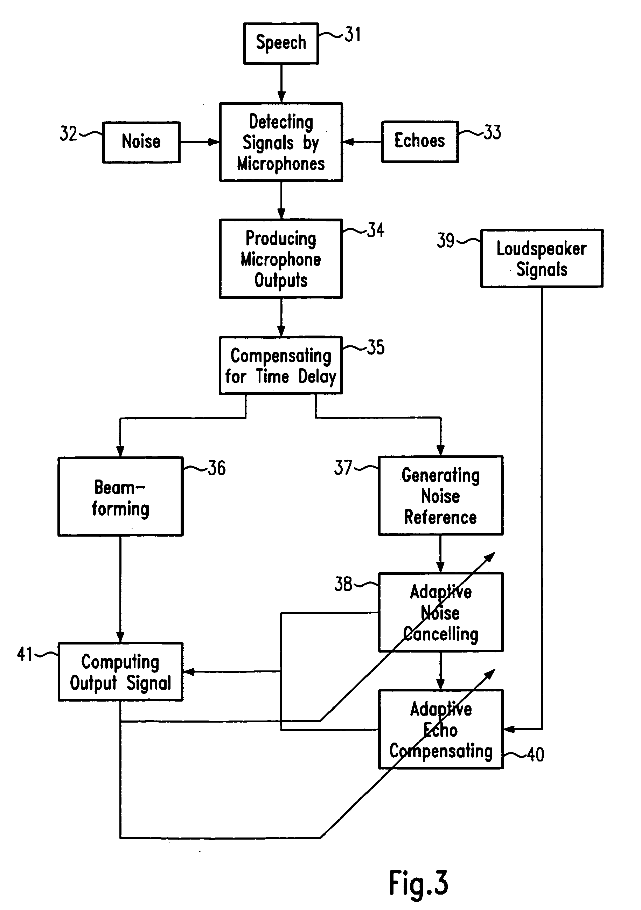

Figure 3 illustrates basic steps of the inventive speech signal processing according to one preferred embodiment. An array of microphones comprising at least two microphones detects signals 30 comprising of speech signals 31, noise signals 32 and echo signals 33 and produces microphone outputs 34.

According to this embodiment the output microphone signals are synchronized corresponding to a desired target signal. For this purpose the time delay of each signal has to be computed and compensated 35.

The synchronized signals serve as input signals for both signal processing paths of the employed GSC. A conventional delay-and-sum beamformer of the upper signal processing path may combine the signals to obtain an output signal 36 with enhanced SNR. A blocking matrix generates noise reference signals 37 by subtracting adjacent channels. Alternatively, a more elaborated matrix known from the art as, e.g., a Walsh-Hadamard kind of blocking matrix or a Griffiths-Jim blocking matrix may be employed.

The noise reference signals are used as input signals for adaptive noise canceling 38. One practical problem lies in the optimization of the adaptive filters of the noise canceling means. Besides noise reduction the inventive speech signal systems provides echo compensation. An AEC means makes use of the loudspeaker signals 39 to compensate for the acoustical echoes 40.

According to the present invention the adaptation of the filters of both the GSC and the AEC means is performed simultaneously. The beamformed signal obtained by the beamforming 36 is further processed by the adaptive noise canceling 38 and the adaptive echo compensating 40, in order to achieve an output signal 41 of high purity.

It may be advantageous to supplement the step of time delay compensation 35 of the microphone output signals by adaptively self-calibrating (not shown) the time delayed signals. Ideally, after this further step of processing the calibrated signals are phase-aligned with respect to the desired signal and the amplitudes of the desired signal portions are equal in each of the multiple channels.

The complex self-calibration filters that perform a matching of the time delayed signals in each channel, can be adapted by the NLMS algorithm (see above) with the goal that the powers of the error signals are minimized.

All previously discussed embodiments are not intended as limitations but serve as examples illustrating features and advantages of the invention. It is to be understood that some or all of the above described features can also be combined in different ways.

**Claims**

1. System for speech signal processing with combined noise reduction and echo compensation, the system comprising
   an adaptive beamforming signal processing means (13) including adaptive beamforming filters configured to receive first speech signals and to derive adaptively beamformed signals from the first speech signals,
   an adaptive echo compensating means (14, 24) including adaptive echo compensating filters configured to reduce acoustic echoes in the adaptively beamformed signals and to output echo-reduced signals,
   **characterized in that** the system additionally comprises
   an adaptation means configured to combine said adaptive beamforming filters with said adaptive echo compensating filters to form one combined filter, wherein said adaptation means is further configured to simultaneously adapt said adaptive beamforming filters and said adaptive echo compensating filters by adapting said combined filter based on said echo-reduced signals.

2. System according to Claim 1 further comprising
   a microphone array (11, 21) comprising at least two microphones to detect microphone signals,
   at least one loudspeaker (12, 22) to output loudspeaker signals comprising second speech signals, and
   wherein the first speech signals are obtained on the basis of the microphone signals, and
   the adaptive echo compensating means (14, 24) reduces acoustic echoes in the adaptively beamformed signals on the basis of the loudspeaker signals.

3. System according to Claim 1 or 2, wherein the adaptive beamforming signal processing means is an adaptive beamformer (13).

4. System according to Claim 1 or 2, wherein the adaptive beamforming signal processing means comprises
   a blocking matrix (25) configured to receive the first speech signals and to obtain noise reference signals,
   an adaptive noise canceling means (26) configured to receive the noise reference signals and to obtain adaptive noise signals, and
   a beamformer (23) configured to receive the first speech signals and to obtain first beamformed signals, and
   a means configured to subtract the adaptive noise signals obtained by the adaptive noise canceling means (26) from the first beamformed signals to obtain the adaptively beamformed signals.

5. System according to Claim 4, wherein the adaptive noise canceling means (26) and the adaptive echo compensating means (24) comprise adaptive filters and the filter length of the adaptive filter of the adaptive echo compensating means is equal to or longer than the filter length of the adaptive filter of the adaptive noise canceling means.

6. System according to one of the preceding claims, wherein the adaptation means simultaneously performs the combined adaptation of the adaptive beamforming means (13) and the adaptive echo compensating means (24) by applying a Least Square optimization criterion.

7. System according to Claim 6, wherein a constraint of the Least Square optimization criterion reads

$$(\underline{\underline{C}}^T(k), 0_{C \times QN_a})^T (w^T(k), a^T(k))^T = c(k)$$

where the upper index $T$ denotes the vector transposition operation, $\underline{C}$ is the conventional constraint matrix known from linearly-constrained minimum variance beamforming, $w(k)$ and $\underline{a(k)}$ are the filters of the adaptive beamforming signal processing means and the adaptive echo compensating means (13, 26), respectively, Q is the number of loudspeakers, $N_a$ is the number of filter coefficients of the filters of the adaptive echo compensating means (24) and c is a constraint vector representing C constraints.

8. System according to one of the Claims 2 - 7, further comprising a means configured to perform a time delay compensation of the microphone signals to obtain the first speech signals.

9. System according to one of the Claims 2 - 8, further comprising an adaptive self-calibration means configured to match the phases and amplitudes of the microphone signals or the time delay compensated microphone signals to obtain the first speech signals.

10. System according to one of the preceding claims, wherein the adaptive beamforming signal processing means (13) and the adaptive echo compensating means (24) and/or the means configured to perform a time delay compensation of the microphone signals and/or the adaptive self-calibration means are configured to perform processing in the time domain or in the frequency domain or in the sub-band frequency domain.

11. System according to one of the claims 2 - 10, wherein the microphone array (11, 21) comprises at least one directional microphone.

12. Method for speech signal processing with combined noise reduction and echo compensation, the method comprising the steps of
receiving first speech signals and deriving adaptively beamformed signals from the first speech signals by means of an adaptive beamforming signal processing means (13) including adaptive beamforming filters; and
reducing acoustic echoes in the adaptively beamformed signals and outputting echo-reduced signals by means of an adaptive echo compensating means (14, 24) including adaptive echo compensating filters;
said method **characterized by** the following steps:

combining said adaptive beamforming filters with said adaptive echo compensating filters to form one combined filter; and
simultaneously adapting said adaptive beamforming filters and said adaptive echo compensating filters by adapting said combined filter based on said echo-reduced signals.

13. Method according to Claim 12, further comprising
detecting microphone signals by a microphone array (11, 21) comprising at least two microphones,
obtaining loudspeaker signals comprising second speech signals output by at least one loudspeaker (12, 22), and wherein
the first speech signals are obtained on the basis of the microphone signals, and
the input signals for the adaptive compensating of acoustic echoes are the loudspeaker signals.

14. Method according to Claim 12 or 13, wherein the adaptive beamforming is performed by an adaptive beamformer (13).

15. Method according to Claim 12 or 13, wherein the adaptive beamforming comprises
receiving and processing the first speech signals by a blocking matrix (25) to obtain noise reference signals,
processing the noise reference signals by an adaptive noise canceling means (26) to obtain adaptive noise signals, and
receiving and processing the first speech signals by a beamformer (13) to obtain first beamformed signals, and
subtracting the adaptive noise signals obtained by the adaptive noise canceling means (26) from the first beamformed signals to obtain the adaptively beamformed signals.

16. Method according to Claim 15, wherein adaptive filters are used for the adaptive echo compensation and the adaptive noise canceling and the filter length of the filter of the adaptive echo compensating means (14, 24) is equal to or longer than the filter length of the filter of the adaptive noise canceling means (26).

17. Method according to one of the Claims 12 - 16, wherein the combined adaptive filters are adapted by applying a Least Square optimization criterion.

18. Method according to Claim 17, wherein a constraint for the Least Square optimization criterion reads

$$(\underline{C}^{T}(k), 0_{C \times QN_a})^{T}(w^{T}(k), a^{T}(k))^{T} = c(k)$$

where the upper index $T$ denotes the vector transposition, $\underline{C}$ is the conventional constraint matrix known from linearly constrained minimum variance beamforming, $w(k)$ and $a(k)$ are the filters of the adaptive beamforming and the adaptive echo compensating, respectively, Q is the number of loudspeakers, $N_a$ is the number of filter coefficients of the filters of the adaptive echo canceling means (14, 24) and c is a constraint vector representing C constraints.

19. Method according to one of the Claims 13 - 18, wherein the microphone signals are compensated for time delay to obtain the first speech signals.

20. Method according to one of the Claims 13 - 19, wherein the microphone signals or the time delay compensated microphone signals are adaptively self-calibrated to obtain the first speech signals.

21. The method of one of the Claims 12 - 20, wherein the adaptive beamforming and the adaptive echo compensating and/or the time delay compensating and/or the adaptive self-calibrating are performed in the time domain or in the frequency domain or in the sub-band frequency domain.

22. Computer program product, comprising one or more computer readable media having computer-executable instructions for performing the steps of the method according to one of the Claims 12 - 21.

**Patentansprüche**

1. System zur Sprachsignalverarbeitung mit kombinierter Geräuschunterdrückung und Echokompensation, wobei das System umfasst

   eine adaptive Beamforming - Signalverarbeitungseinrichtung (13), die adaptive Beamforming - Filter einschließt, und die dazu ausgebildet ist, erste Sprachsignale zu empfangen und adaptiv gebeamformte Signale aus den ersten Sprachsignalen abzuleiten,
   eine adaptive Echokompensationseinrichtung (14, 24), die adaptive Echokompensationsfilter einschließt, und die dazu ausgebildet ist, akustische Echos in den adaptiv gebeamformten Signalen zu verringern und echoreduzierte Signale auszugeben,
   **dadurch gekennzeichnet, dass** das System zusätzlich umfasst
   eine Adaptionseinrichtung, die dazu ausgebildet ist, die genannten adaptiven Beamforming - Filter mit den genannten adaptiven Echokompensationsfiltern zu kombinieren, um ein kombiniertes Filter zu bilden, wobei die genannte Adaptionseinrichtung weiterhin dazu ausgebildet ist, gleichzeitig die genannten adaptiven Beamforming - Filter und die genannten adaptiven Echokompensationsfilter durch Adaptieren des genannten kombinierten Filters auf der Grundlage der genannten echoreduzierten Signale zu adaptieren.

2. System gemäß Anspruch 1, das weiterhin umfasst
   eine Mikrofonanordnung (11, 21, die zumindest zwei Mikrofone zum Detektieren von Mikrofonsignalen umfasst,
   zumindest einen Lautsprecher (12, 22) zum Ausgeben von Lautsprechersignalen, die zweite Sprachsignale umfassen, und
   wobei die ersten Sprachsignale auf der Grundlage der Mikrofonsignale erhalten werden, und
   die adaptive Echokompensationseinrichtung (14, 24) akustische Echos in den adaptiv gebeamformten Signalen auf der Grundlage der Lautsprechersignale verringert.

3. System gemäß Anspruch 1 oder 2, in dem die adaptive Beamforming - Signalverarbeitungseinrichtung ein adaptiver Beamformer (13) ist.

4. System gemäß Anspruch 1 oder 2, in dem die adaptive Beamforming - Signalverarbeitungseinrichtung umfasst
   eine Blockiermatrix (25), die dazu ausgebildet ist, die ersten Sprachsignale zu empfangen und Geräuschreferenzsignale zu erhalten,
   eine adaptive Geräuscheliminationseinrichtung (26), die dazu ausgebildet ist, die Geräuschreferenzsignale zu empfangen und adaptive Geräuschsignale zu erhalten, und

einen Beamformer (23), der dazu ausgebildet ist, die ersten Sprachsignale zu empfangen und erste gebeamformte Signale zu erhalten, und

eine Einrichtung, die dazu ausgebildet ist, die adaptiven Geräuschsignale, die durch die adaptive Geräuscheliminationseinrichtung (26) erhalten werden, von den ersten gebeamformten Signalen zu subtrahieren, um die adaptive gebeamformten Signale zu erhalten.

5. System gemäß Anspruch 4, in dem die adaptive Geräuscheliminationseinrichtung (26) und die adaptive Echokompensationseinrichtung (24) adaptive Filter umfassen und die Filterlänge der adaptiven Filter der adaptiven Echokompensationseinrichtung gleich der oder größer als die Filterlänge der adaptiven Filter der adaptiven Geräuscheliminationseinrichtung ist.

6. System gemäß einem der vorhergehenden Ansprüche, in dem die Adaptionseinrichtung gleichzeitig die kombinierte Adaption der adaptiven Beamforming - Einrichtung (13) und der adaptiven Echokompensationseinrichtung (24) durch Anwenden eines Kleinstes - Quadrat - Optimierungs - Kriteriums ausführt.

7. System gemäß Anspruch 6, in dem eine Bedingung des Kleinstes - Quadrat - Optimierungs - Kriteriums lautet

$$(\underline{C}^T(k), 0_{C \times QN_a})^T (w^T(k), a^T(k))^T = c(k)$$

wobei der obere Index T die Vektortransponiertenoperation bezeichnet, $\underline{C}$ die herkömmliche Bedingungsmatrix ist, die aus dem linear - bedingten Minimum - Varianz - Beamforming bekannt ist, w(k) und a(k) die Filter der adaptiven Beamforming - Signalverarbeitungseinrichtung bzw. der adaptiven Echokompensationseinrichtung (13, 26) sind, Q die Anzahl der Lautsprecher ist, $N_a$ die Anzahl der Filterkoeffizienten der Filter der adaptiven Echokompensationseinrichtung (24) ist und c ein Bedingungsvektor ist, der C Bedingungen darstellt.

8. System gemäß einem der Ansprüche 2 - 7, das weiterhin eine Einrichtung umfasst, die dazu ausgebildet ist, eine Zeitverzögerungskompensation der Mikrofonsignale auszuführen, um die ersten Sprachsignale zu erhalten.

9. System gemäß einem der Ansprüche 2 - 8, das weiterhin eine adaptive Selbstkalibrierungseinrichtung umfasst, die dazu ausgebildet ist, die Phasen und Amplituden der Mikrofonsignale oder der zeitverzögerungskompensierten Mikrofonsignale anzupassen, um die ersten Sprachsignale zu erhalten.

10. System gemäß einem der vorhergehenden Ansprüche, in dem die adaptive Beamforming - Signalverarbeitungseinrichtung (13) und die adaptive Echokompensationseinrichtung (24) und/oder die Einrichtung, die dazu ausgebildet ist, eine Zeitverzögerungskompensation der Mikrofonsignale auszuführen und/oder die adaptive Selbstkalibrierungseinrichtung dazu ausgebildet sind, eine Verarbeitung in dem Zeitregime oder in dem Frequenzregime oder in dem Frequenz - Teilband - Regime auszuführen.

11. System gemäß einem der Ansprüche 2 - 10, in dem die Mikrofonanordnung (11, 21) zumindest ein Richtmikrofon umfasst.

12. Verfahren zur Sprachsignalverarbeitung mit kombinierter Geräuschunterdrückung und Echokompensation, wobei das Verfahren die Schritte umfasst

Empfangen erster Sprachsignale und Ableiten adaptiv gebeamformter Signale aus den ersten Sprachsignalen mithilfe einer adaptiven Beamforming - Signalverarbeitungseinrichtung (13), die adaptive Beamforming - Filter einschließt; und

Verringern akustischer Echos in den adaptive gebeamformten Signalen und Ausgeben echoreduzierter Signale mithilfe einer adaptiven Echokompensationseinrichtung (14, 24), die adaptive Echokompensationsfilter einschließt; wobei das genannte Verfahren durch die folgenden Schritte **gekennzeichnet** ist:

Kombinieren der genannten adaptiven Beamforming - Filter mit den genannten adaptiven Echokompensationsfiltern, um ein kombiniertes Filter zu bilden; und

gleichzeitig Adaptieren der genannten adaptiven Beamforming - Filter und der genannten adaptiven Echokompensationsfilter durch Adaptieren des genannten kombinierten Filters auf der Grundlage der genannten echoreduzierten Signale.

**13.** Verfahren gemäß Anspruch 12, das weiterhin umfasst
Detektieren von Mikrofonsignalen mit einer Mikrofonanordnung (11, 21), die zumindest zwei Mikrofone umfasst,
Erhalten von Lautsprechersignalen, die zweite Sprachsignale umfassen, die von zumindest einem Lautsprecher (12, 22) ausgegeben werden, und wobei
die ersten Sprachsignale auf der Grundlage der Mikrofonsignale erhalten werden, und
die Eingangssignale für das adaptive Kompensieren akustischer Echos die Lautsprechersignale sind.

**14.** Verfahren gemäß Anspruch 12 oder 13, in dem das adaptive Beamformen von einem adaptiven Beamformer (13) ausgeführt wird.

**15.** Verfahren gemäß Anspruch 12 oder 13, in dem das adaptive Beamformen umfasst
Empfangen und Verarbeiten der ersten Sprachsignale durch eine Blockiermatrix (25), um Geräuschreferenzsignale zu erhalten,
Verarbeiten der Geräuschreferenzsignale durch eine adaptive Geräuscheliminationseinrichtung (26), um adaptive Geräuschsignale zu erhalten, und
Empfangen und Verarbeiten der ersten Sprachsignale mit einem Beamformer (13), um erste gebeamformte Signale zu erhalten, und
Subtrahieren der adaptiven Geräuschsignale, die durch die adaptive Geräuscheliminationseinrichtung (26) erhalten werden, von den ersten gebeamformten Signalen, um die adaptiv gebeamformten Signale zu erhalten.

**16.** Verfahren gemäß Anspruch 15, in dem die adaptiven Filter für die adaptive Echokompensation und die adaptive Geräuscheliminierung verwendet werden, und die Filterlänge des Filters der adaptiven Echokompensationseinrichtung (14, 24) gleich der oder größer als die Filterlänge des Filters der adaptiven Geräuscheliminationseinrichtung (26) ist.

**17.** Verfahren gemäß einem der Ansprüche 12 - 16, in dem die kombinierten adaptiven Filter durch Anwenden eines Kleinstes - Quadrat - Optimierungs - Kriteriums adaptiert werden.

**18.** Verfahren gemäß Anspruch 17, in dem eine Bedingung für das Kleinstes - Quadrat - Optimierungs - Kriterium lautet

$$(\underline{C}^T(k), 0_{C \times QN_a})^T (w^T(k), a^T(k))^T = c(k)$$

wobei der obere Index T die Vektortransponiertenoperation bezeichnet, $\underline{C}$ die herkömmliche Bedingungsmatrix ist, die aus dem linear - bedingten Minimum - Varianz - Beamforming bekannt ist, w(k) und a(k) die Filter des adaptiven Beamformings bzw. des adaptiven Echokompensierens (13, 26) sind, Q die Anzahl der Lautsprecher ist, $N_a$ die Anzahl der Filterkoeffizienten der Filter der adaptiven Echokompensationseinrichtung (24) ist und c ein Bedingungsvektor ist, der C Bedingungen darstellt.

**19.** Verfahren gemäß einem der Ansprüche 13 -18, in dem die Mikrofonsignale bezüglich einer Zeitverzögerung kompensiert werden, um die ersten Sprachsignale zu erhalten.

**20.** Verfahren gemäß einem der Ansprüche 13 - 19, in dem die Mikrofonsignale oder die zeitverzögerungskompensierten Mikrofonsignale adaptiv selbstkalibriert werden, um die ersten Sprachsignale zu erhalten.

**21.** Das Verfahren von einem der Ansprüche 12 - 20, in dem das adaptive Beamformen und das adaptive Echokompensieren und/oder das Zeitverzögerungskompensieren und/oder das adaptive Selbstkalibrieren in dem Zeitregime oder in dem Frequenzregime oder in dem Frequenz - Teilband - Regime ausgeführt werden.

**22.** Computerprogrammprodukt, das ein oder mehrere computerlesbare Medien umfasst, die computerausführbare Anweisungen zum Ausführen der Schritte des Verfahrens gemäß einem der Ansprüche 12 - 21 aufweisen.

**Revendications**

**1.** Système pour le traitement de signal de parole avec une réduction de bruit et une compensation d'écho combinées, le système comprenant :

des moyens de traitement de signal de formation de faisceau adaptatifs (13) comprenant des filtres de formation de faisceau adaptatifs configurés pour recevoir des premiers signaux de parole et pour déduire des signaux mis sous forme de faisceau de manière adaptative à partir des premiers signaux de parole,
des moyens de compensation d'écho adaptatifs (14, 24) comprenant des filtres de compensation d'écho adaptatifs configurés pour réduire des échos acoustiques dans les signaux mis sous forme de faisceau de manière adaptative et pour délivrer des signaux à écho réduit,

**caractérisé en ce que** le système comprend en plus
des moyens d'adaptation configurés pour combiner lesdits filtres de formation de faisceau adaptatifs avec lesdits filtres de compensation d'écho adaptatifs pour former un filtre combiné, dans lequel lesdits moyens d'adaptation sont en outre configurés pour adapter simultanément lesdits filtres de formation de faisceau adaptatifs et lesdits filtres de compensation d'écho adaptatifs en adaptant ledit filtre combiné sur la base desdits signaux à écho réduit.

2. Système selon la revendication 1 comprenant en outre :

un réseau de microphones (11, 21) comprenant au moins deux microphones pour détecter des signaux de microphones,
au moins un haut-parleur (12, 22) pour délivrer des signaux de haut-parleur comprenant des deuxièmes signaux de parole, et
dans lequel les premiers signaux de parole sont obtenus sur la base des signaux de microphones, et
les moyens de compensation d'écho adaptatifs (14, 24) réduisent les échos acoustiques dans les signaux mis sous forme de faisceau de manière adaptative sur la base des signaux de haut-parleur.

3. Système selon la revendication 1 ou 2, dans lequel les moyens de traitement de signal de formation de faisceau adaptatifs sont un dispositif de formation de faisceau adaptatif (13).

4. Système selon la revendication 1 ou 2, dans lequel les moyens de traitement de signal de formation de faisceau adaptatifs comprennent :

une matrice de blocage (25) configurée pour recevoir les premiers signaux de parole et pour obtenir des signaux de référence de bruit,
des moyens d'annulation de bruit adaptatifs (26) configurés pour recevoir les signaux de référence de bruit et pour obtenir des signaux de bruit adaptatifs, et
un dispositif de formation de faisceau (23) configuré pour recevoir les premiers signaux de parole et pour obtenir des premiers signaux mis sous forme de faisceau, et
des moyens configurés pour soustraire les signaux de bruit adaptatifs obtenus par les moyens d'annulation de bruit adaptatifs (26) des premiers signaux mis sous forme de faisceau pour obtenir les signaux mis sous forme de faisceau de manière adaptative.

5. Système selon la revendication 4, dans lequel les moyens d'annulation de bruit adaptatifs (26) et les moyens de compensation d'écho adaptatifs (24) comprennent des filtres adaptatifs et la longueur de filtre du filtre adaptatif des moyens de compensation d'écho adaptatifs est égale ou supérieure à la longueur de filtre du filtre adaptatif des moyens d'annulation de bruit adaptatifs.

6. Système selon l'une des revendications précédentes, dans lequel les moyens d'adaptation effectuent simultanément l'adaptation combinée des moyens de formation de faisceau adaptatifs (13) et des moyens de compensation d'écho adaptatifs (24) en appliquant un critère d'optimisation des moindres carrés.

7. Système selon la revendication 6, dans lequel une contrainte du critère d'optimisation des moindres carrés est

$$(\underline{C}^{T}(k), 0_{C \times QN_{a}})^{T} (w^{T}(k), a^{T}(k))^{T} = c(k)$$

où l'exposant T désigne l'opération de transposition vectorielle, $\underline{C}$ est la matrice de contrainte classique connue à partir d'une formation de faisceau à variance minimum à contrainte linéaire, w(k) et a(k) sont les filtres des moyens de traitement de signal de formation de faisceau adaptatifs et des moyens de compensation d'écho adaptatifs (13, 26), respectivement, Q est le nombre de haut-parleurs, $N_a$ est le nombre de coefficients de filtre des filtres des moyens de compensation d'écho adaptatifs (24) et c est un vecteur de contrainte représentant C contraintes.

**8.** Système selon l'une des revendications 2 à 7, comprenant en outre des moyens configurés pour effectuer une compensation de retard des signaux de microphones pour obtenir les premiers signaux de parole.

**9.** Système selon l'une des revendications 2 à 8, comprenant en outre des moyens d'auto-étalonnage adaptatifs configurés pour faire correspondre les phases et les amplitudes des signaux de microphones ou des signaux de microphones à retard compensé pour obtenir les premiers signaux de parole.

**10.** Système selon l'une des revendications précédentes, dans lequel les moyens de traitement de signal de formation de faisceau adaptatifs (13) et les moyens de compensation d'écho adaptatifs (24) et/ou les moyens configurés pour effectuer une compensation de retard des signaux de microphones et/ou les moyens d'auto-étalonnage adaptatifs sont configurés pour effectuer un traitement dans le domaine temporel ou dans le domaine fréquentiel ou dans le domaine fréquentiel de sous-bande.

**11.** Système selon l'une des revendications 2 à 10, dans lequel le réseau de microphones (11, 21) comprend au moins un microphone directionnel.

**12.** Procédé pour le traitement de signal de parole avec une réduction de bruit et une compensation d'écho combinées, le procédé comprenant les étapes consistant à :

recevoir des premiers signaux de parole et déduire des signaux mis sous forme de faisceau de manière adaptative à partir des premiers signaux de parole au moyen de moyens de traitement de signal de formation de faisceau adaptatifs (13) comprenant des filtres de formation de faisceau adaptatifs ; et
réduire les échos acoustiques dans les signaux mis sous forme de faisceau de manière adaptative et délivrer des signaux à écho réduit au moyen de moyens de compensation d'écho adaptatifs (14, 24) comprenant des filtres de compensation d'écho adaptatifs ;

ledit procédé étant **caractérisé par** les étapes suivantes consistant à :

combiner lesdits filtres de formation de faisceau adaptatifs avec lesdits filtres de compensation d'écho adaptatifs pour former un filtre combiné ; et
adapter simultanément lesdits filtres de formation de faisceau adaptatifs et lesdits filtres de compensation d'écho adaptatifs en adaptant ledit filtre combiné sur la base desdits signaux à écho réduit.

**13.** Procédé selon la revendication 12, comprenant en outre les étapes consistant à :

détecter des signaux de microphones par un réseau de microphones (11, 21) comprenant au moins deux microphones,
obtenir des signaux de haut-parleur comprenant des deuxièmes signaux de parole délivrés par au moins un haut-parleur (12, 22), et dans lequel
les premiers signaux de parole sont obtenus sur la base des signaux de microphones, et
les signaux d'entrée pour la compensation adaptative d'échos acoustiques sont les signaux de haut-parleur.

**14.** Procédé selon la revendication 12 ou 13, dans lequel la formation de faisceau adaptative est effectuée par un dispositif de formation de faisceau adaptatif (13).

**15.** Procédé selon la revendication 12 ou 13, dans lequel la formation de faisceau adaptative comprend les étapes consistant à :

recevoir et traiter les premiers signaux de parole par une matrice de blocage (25) pour obtenir des signaux de référence de bruit,
traiter les signaux de référence de bruit par des moyens d'annulation de bruit adaptatifs (26) pour obtenir des signaux de bruit adaptatifs, et
recevoir et traiter les premiers signaux de parole par un dispositif de formation de faisceau (13) pour obtenir des premiers signaux mis sous forme de faisceau, et

soustraire les signaux de bruit adaptatifs obtenus par les moyens d'annulation de bruit adaptatifs (26) des premiers signaux mis sous forme de faisceau pour obtenir les signaux mis sous forme de faisceau de manière adaptative.

**16.** Procédé selon la revendication 15, dans lequel des filtres adaptatifs sont utilisés pour la compensation d'écho adaptative et l'annulation de bruit adaptative et la longueur de filtre du filtre des moyens de compensation d'écho adaptatifs (14, 24) est égale ou supérieure à la longueur de filtre du filtre des moyens d'annulation de bruit adaptatifs (26).

**17.** Procédé selon l'une des revendications 12 à 16, dans lequel les filtres adaptatifs combinés sont adaptés en appliquant un critère d'optimisation des moindres carrés.

**18.** Procédé selon la revendication 17, dans lequel une contrainte pour le critère d'optimisation des moindres carrés est

$$(\underline{C}^T(k), 0_{C \times QN_a})^T (w^T(k), a^T(k))^T = c(k)$$

où l'exposant T désigne la transposition vectorielle, $\underline{C}$ est la matrice de contrainte classique connue à partir d'une formation de faisceau à variance minimum à contrainte linéaire, w(k) et a(k) sont les filtres de la formation de faisceau adaptative et de la compensation d'écho adaptative, respectivement, Q est le nombre de haut-parleurs, $N_a$ est le nombre de coefficients de filtre des filtres des moyens d'annulation d'écho adaptatifs (14, 24) et c est un vecteur de contrainte représentant C contraintes.

**19.** Procédé selon l'une des revendications 13 à 18, dans lequel les retards des signaux de microphones sont compensés pour obtenir les premiers signaux de parole.

**20.** Procédé selon l'une des revendications 13 à 19, dans lequel les signaux de microphones ou les signaux de microphones à retard compensé sont auto-étalonnés de manière adaptative pour obtenir les premiers signaux de parole.

**21.** Procédé selon l'une des revendications 12 à 20, dans lequel la formation de faisceau adaptative et la compensation d'écho adaptative et/ou la compensation d'écho adaptative et/ou l'auto-étalonnage adaptatif sont effectués dans le domaine temporel ou dans le domaine fréquentiel ou dans le domaine fréquentiel de sous-bande.

**22.** Produit-programme informatique, comprenant un ou plusieurs supports pouvant être lus par un ordinateur comportant des instructions exécutables par un ordinateur pour effectuer les étapes du procédé selon l'une des revendications 12 à 21.

Fig.1

Fig.2

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0204718 B1
- EP 1020068 B1
- WO 9626592 A
- WO 0193554 A2

### Non-patent literature cited in the description

- **H.L. VAN TREES.** Optimum Array Processing, Part IV of Detection, Estimation, and Modulation Theory. Wiley & Sons, 2002
- A Robust Adaptive Beamformer for Microphone Arrays with a Blocking Matrix Using Constrained Adaptive Filters. **O. HOSHUYAMA ; SUGIYAMA ; A. HIRANO.** IEEE, Trans. Sign. Proc. October 1999, vol. 47
- Broad band beamforming and the generalized sidelobe canceller. IEEE Trans. on Acoustic Speech and Signal Processing. vol. 34, 1322